# DEMANDE DE BREVET EUROPEEN

(11) **EP 0 724 149 A1**
(43) Date de publication de la demande: **31.07.1996**
(21) Numéro de dépôt: 96400148.1
(22) Date de dépôt: 22.01.1996
(51) Int. Cl.: G01N 21/88, G01B 11/24

(54) **Procédé de contrôle non destructif d'une surface, en particulier en milieu hostile**

(30) Priorité: 27.01.1995 FR 9500962
(71) Demandeur: GEC ALSTHOM SYSTEMES ET SERVICES SA, 75016 Paris (FR)
(72) Inventeur: Freneix, Gérard, F-44230 Saint Sebastian (FR)
(74) Mandataire: Gosse, Michel

(57) **Abrégé**

Procédé de contrôle non destructif d'une surface, en particulier en milieu hostile, comprenant l'étape de :
- disposer à proximité de ladite surface, une caméra vidéo télécommandée supportée par un dispositif de positionnement instrumenté, ladite caméra vidéo étant destinée à fournir des images vidéo de ladite surface à contrôler ;

ledit procédé étant caractérisé en ce qu'il comprend en outre les étapes de :
- générer une image de synthèse en trois dimensions d'un modèle de ladite surface à contrôler;
- superposer sur un écran une ou plusieurs projections en deux dimensions de ladite image de synthèse à une ou plusieurs images vidéo correspondantes;
- calibrer une ou plusieurs projections en deux dimensions de ladite image de synthèse sur une ou plusieurs images vidéo correspondantes pour obtenir une image de synthèse correspondant sensiblement à la surface à contrôler;
- transférer sur une projection en deux dimensions calibrée de ladite image de synthèse, une ou plusieurs indications visibles sur l'image vidéo correspondante, puis projeter ces indications sur l'image de synthèse en trois dimensions;
- traiter la ou les images de synthèse en trois dimensions ainsi obtenues, ou leur projections en deux dimensions, pour analyser et caractériser lesdites indications de la surface à contrôler.

## Description

La présente invention concerne un procédé de contrôle non destructif d'une surface, en particulier en milieu hostile. Par milieu hostile, on entend tout milieu où l'intervention de l'homme est soit impossible, soit très limitée, comme par exemple l'espace, les fonds marins ou les zones polluées par de substances chimiques, radioactives ou d'autres polluants.

Pour contrôler des surfaces situées dans un tel milieu hostile, il est donc nécessaire d'avoir recours à des machines télécommandées.

Ainsi, il est connu d'utiliser des caméras vidéo télécommandées qui fournissent des images vidéo de la surface à contrôler.

Cette technique est toutefois insuffisante pour pouvoir déterminer et/ou caractériser précisément certains détails de la surface à contrôler, comme par exemple l'existence d'indications ou de défauts. En effet, l'opérateur mesure directement sur l'écran ou par l'intermédiaire d'un mesureur vidéo, les différentes distances, celles-ci étant alors transformées par calcul pour déterminer par exemple la position et les dimensions de l'indication en question. Un premier inconvénient est que si la surface contrôlée est complexe, le calcul peut devenir très fastidieux. D'autre part, si l'indication à analyser est de grande dimension et par conséquent répartie sur plusieurs images vidéo, le raccordement de celles-ci peut s'avérer très difficile, ce qui entraîne une précision aléatoire des dimensions calculées.

En outre, la mobilité de la caméra, et donc les angles de vue, pouvant parfois être limitée, une exploitation de l'image vidéo peut devenir difficile voire impossible. De plus, une représentation globale de l'ensemble de la surface à contrôler sur une seule image peut être impossible selon la géométrie de ladite surface.

L'invention a pour but de fournir un procédé de contrôle non destructif d'une surface, en particulier en milieu hostile, ne présentant pas les inconvénients précités.

L'invention a donc pour objet un procédé de contrôle de surface, en particulier en milieu hostile, permettant de caractériser et/ou d'analyser simplement et de manière fiable des éventuelles indications présentes sur la surface à contrôler.

L'invention a également pour objet un procédé de contrôle de surface, en particulier en milieu hostile, assurant une précision optimale dans la caractérisation de telles indications.

L'invention a en outre pour objet un procédé de contrôle de surface, en particulier en milieu hostile, permettant de représenter la surface à contrôler et/ou les indications à caractériser d'une manière quelconque souhaitée, notamment selon différents angles de vue et selon différentes configurations (vue d'ensemble ou vues partielles), et permettant également de comparer différentes images ainsi obtenues.

L'invention a également pour objet un procédé de contrôle de surface, en particulier en milieu hostile, où le calcul de caractérisation à partir des distances mesurées sur l'image vidéo est réalisé automatiquement, libérant ainsi l'opérateur d'une tâche longue, fastidieuse et peu intéressante.

Ces objets et d'autres sont réalisés selon l'invention par un procédé de contrôle non destructif d'une surface, en particulier en milieu hostile, comprenant l'étape de :
- disposer à proximité de ladite surface, une caméra vidéo télécommandée supportée par un dispositif de positionnement instrumenté, ladite caméra vidéo étant destinée à fournir des images vidéo de ladite surface à contrôler ;
ledit procédé étant caractérisé en ce qu'il comprend en outre les étapes de :
- générer une image de synthèse en trois dimensions d'un modèle de ladite surface à contrôler;
- superposer sur un écran une ou plusieurs projections en deux dimensions de ladite image de synthèse à une ou plusieurs images vidéo correspondantes ;
- calibrer une ou plusieurs projections en deux dimensions de ladite image de synthèse sur une ou plusieurs images vidéo correspondantes pour obtenir une image de synthèse correspondant sensiblement à la surface à contrôler;
- transférer sur une projection en deux dimensions calibrée de ladite image de synthèse, une ou plusieurs indications visibles sur l'image vidéo correspondante, puis projeter ces indications sur l'image de synthèse en trois dimensions ;
- traiter la ou les images de synthèse en trois dimensions ainsi obtenues, ou leur projections en deux dimensions, pour analyser et caractériser lesdites indications de la surface à contrôler.

Généralement, l'étape de générer une image de synthèse est réalisée en introduisant dans un logiciel des paramètres d'entrées caractéristiques de ladite surface. Ainsi, la surface à contrôler peut être décrite mathématiquement et une indication située dans ladite surface à contrôler peut être caractérisée, c'est-à-dire dimensionnée et positionnée avec plus de précision, par le procédé selon l'invention.

Selon une variante avantageuse du procédé, l'étape de superposer une image de synthèse à une image vidéo correspondante est réalisée par une superposition globale des deux images.

Selon une autre variante du procédé, l'étape de superposer une image de synthèse à une image vidéo correspondante est réalisée par une superposition manuelle point par point des deux images.

De préférence, l'étape de calibrer une image de synthèse sur une image vidéo correspondante est réalisée en faisant concorder des éléments connus avec précision, et/ou en faisant varier un ou plusieurs desdits paramètres d'entrée.

Eventuellement, l'étape de transférer sur une image de synthèse une ou plusieurs indications de l'image vidéo peut être réalisée par un transfert manuel point par point.

Toutefois, cette étape de transférer sur une image de synthèse une ou plusieurs indications de l'image vidéo peut aussi être réalisée par une méthode d'extraction de contour.

Avantageusement, l'étape de traiter la ou les images de synthèse comprend notamment de positionner avec précision l'indication, de dimensionner avec précision l'indication, de modifier l'angle de vue, de comparer différentes vues d'une même indication, de reconstituer une indication de grande dimension, de reconstituer en volume la surface complète qui a été contrôlée, de stocker une ou plusieurs images et de les imprimer.

De préférence, le logiciel est un logiciel de CAO 3D (conception assistée par ordinateur en trois dimensions).

Selon une application particulière de l'invention, le procédé est utilisé pour analyser et caractériser des indications mises en évidence par un contrôle par ressuage des soudures, notamment des adaptateurs, sur un couvercle d'une cuve de réacteur nucléaire, où lesdits paramètres d'entrée pour générer une image de synthèse de la surface à contrôler comprennent notamment les paramètres dimensionnels du couvercle, de l'adaptateur et de la soudure, les paramètres de position du dispositif de positionnement de la caméra vidéo, les paramètres d'un ou plusieurs miroirs éventuels et les paramètres de fonctionnement de la caméra vidéo.

D'autres caractéristiques et avantages de l'invention apparaîtront au cours de la description détaillée suivante, d'un mode d'utilisation de l'invention donné à titre d'exemple non limitatif, en regard des dessins joints, sur lesquels :
- la figure 1 représente une vue schématique en coupe verticale de la soudure d'un adaptateur sur le couvercle d'une cuve de réacteur nucléaire,
- la figure 2 représente une vue schématique en coupe horizontale du couvercle de la cuve avec un adaptateur et d'une caméra vidéo,
- la figure 3 est une vue similaire à la figure 1 représentant en outre une caméra vidéo, et
- la figure 4 est une vue similaire à celle de la figure 3, représentant en outre un miroir de redressement.

Le procédé selon l'invention va donc être décrit ci-après en relation à une application particulière, à savoir la caractérisation des indications mises en évidence par un contrôle par ressuage des soudures notamment de l'évent et des adaptateurs sur les couvercles de cuves de réacteurs nucléaires.

Ces soudures étant soumises à des contraintes importantes en raison des conditions notamment de température et de pression régnant à l'intérieur d'une cuve, elles s'usent avec le temps et des indications, c'est-à-dire des défauts tels que par exemple des fissures, peuvent apparaître. Une technique permettant de mettre en évidence ces indications est le contrôle par ressuage. Les soudures sont d'abord nettoyées, en particulier par brossage, pour éliminer toutes les traces d'oxydation, puis un produit dit de mouillage est appliqué sur la soudure. Ce produit de mouillage est destiné à s'infiltrer dans les moindres fissures de la soudure. Après un certain temps d'infiltration, on applique un produit de masquage qui a pour fonction d'agir sensiblement comme un buvard. Le produit de mouillage qui s'est infiltré dans les indications est ainsi aspiré et provoque des marques caractéristiques desdites indications. En analysant les caractéristiques de ces indications, c'est-à-dire notamment leurs formes et leurs dimensions, on peut déterminer l'état général de la soudure.

L'utilisation de l'homme pour caractériser de visu de telles indications n'est pas envisageable, car celui-ci serait soumis en quelques minutes au rayonnement annuel maximal autorisé.

Par conséquent, il est nécessaire de recourir à des machines télécommandées et/ou instrumentés de l'extérieur par un opérateur.

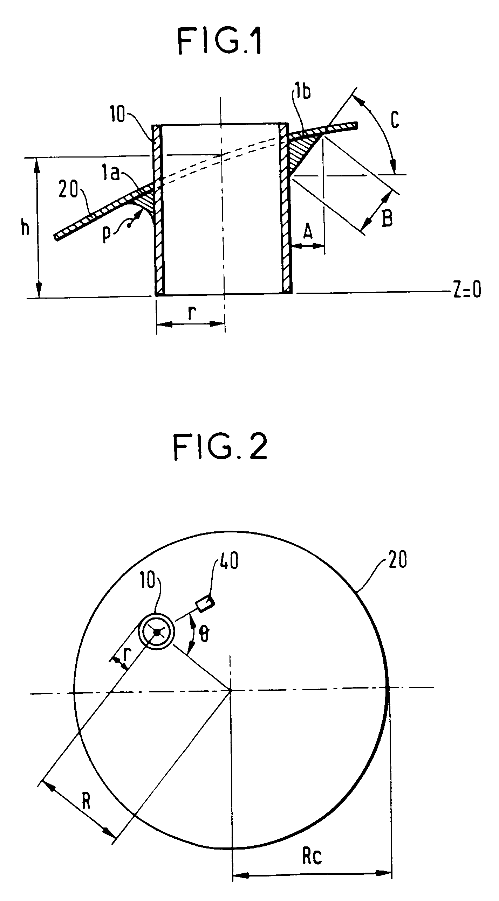

L'invention prévoit de disposer une caméra vidéo à l'intérieur du couvercle de la cuve pour fournir des images vidéo des surfaces à contrôler, c'est-à-dire des soudures. Le procédé selon l'invention est utilisé pour toutes les soudures existant à l'intérieur dudit couvercle, mais ses performances sont plus spectaculaires avec les surfaces les plus complexes, c'est-à-dire avec les soudures des adaptateurs qui sont excentrés par rapport à l'axe vertical central du couvercle. Un tel adaptateur 10 est représenté sur les figures 1 à 4.

La caméra vidéo est disposée sur un dispositif de positionnement instrumenté, tel qu'un robot qui permet à l'opérateur de déplacer ladite caméra d'une manière quelconque souhaitée à partir de son poste de travail, et de connaître avec précision à tout moment la position exacte de ladite caméra.

Le procédé selon l'invention a pour effet d'améliorer et de simplifier le traitement des images vidéo fournies par la caméra.

Pour ce faire, l'invention prévoit de générer une image de synthèse tridimensionnelle de la surface à contrôler, c'est-à-dire en se référant aux figures, la soudure 1 d'un adaptateur 10 sur un couvercle 20 d'une cuve de réacteur nucléaire. Cette image de synthèse est de préférence générée à l'aide d'un logiciel de CAO 3D (conception assistée par ordinateur en trois dimensions) ou de CAO robotique, à partir de paramètres d'entrée connus.

Cette image de synthèse, qui représente un modèle "idéal", c'est-à-dire théorique de la soudure, est ensuite superposée à une image vidéo correspondante et lesdits paramètres d'entrée sont modifiés pour calibrer et recaler l'image de synthèse sur l'image vidéo. On obtient alors une image de synthèse de la soudure correspondant très précisément à la soudure elle-même.

Des éventuelles indications visibles sur l'image vidéo sont alors transférées sur l'image de synthèse, et celle-ci peut alors être traitée à souhait à l'aide de la CAO.

Les paramètres d'entrée permettant de générer l'image de synthèse sont multiples.

En se référant à la figure 1, une soudure d'un adaptateur excentré 10 sur un couvercle sphérique 20 comporte un côté dit "fermé" 1a où la surface de la soudure présente une courbure circulaire, et un côté dit "ouvert" 1b où la surface de la soudure est sensiblement plane. Lesdits paramètres de la soudure comprennent dont notamment le rayon p de la soudure côté fermé 1a, l'angle C du plan de la soudure, côté ouvert 1b, par rapport à l'horizontale, la largeur A dans le plan horizontal de la soudure côté ouverte 1b, et la longueur B dans son plan de la soudure côté ouvert 1b.

D'autre part, comme visible sur les figures 1 et 2, les paramètres d'entrée comprennent aussi les dimensions du couvercle et de l'adaptateur, c'est-à-dire le rayon Rc du couvercle, le rayon extérieur r de l'adaptateur et la hauteur h de l'adaptateur par rapport au couvercle.

La surface à analyser est donc connue mathématiquement ainsi que sa position dans l'espace.

Pour obtenir une image de synthèse qui soit compatible avec l'image vidéo fournie par la caméra vidéo, d'autres paramètres entrent en ligne de compte.

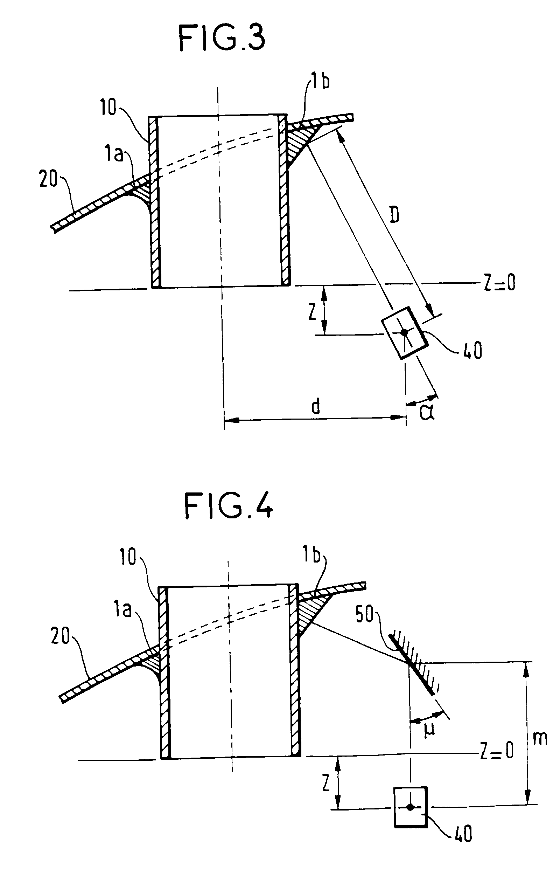

En référence aux figures 3 et 4, ces paramètres comprennent notamment les paramètres de position du robot portant la caméra 40, c'est-à-dire la distance Z de la caméra par rapport au plan horizontal d'extrémité inférieure de l'adaptateur, le déport latéral d de la caméra, l'angle de site α et l'ange de prise de vue θ. Lorsque un ou plusieurs miroirs de redressement 50 sont utilisés, comme visible sur la figure 4, les paramètres d'entrée comprennent également la distance m dudit miroir au centre de la caméra 40 et son angle µ par rapport à la verticale.

En outre, les paramètres d'entrée comprennent également les paramètres de fonctionnement de la caméra, tel que par exemple la distance de convergence D de la caméra.

Ainsi, les caractéristiques de la caméra vidéo sont également connues mathématiquement du même que sa position dans l'espace.

A partir de tous ces paramètres d'entrée, le logiciel CAO calcule une image vue par la caméra, c'est l'image de synthèse.

Cette image de synthèse, ou modèle en trois dimensions, comporte donc notamment la sphère intérieure du couvercle, le cylindre représentant l'adaptateur, la surface représentant la soudure, la courbe d'intersection couvercle-soudure et la courbe d'intersection adaptateur-soudure. Généralement, lors du contrôle des soudures, on inspecte également les zones adjacentes à la soudure de l'adaptateur et du couvercle. L'image de synthèse comporte donc avantageusement également la courbe limite d'inspection sur le couvercle et la courbe limite d'inspection sur l'adaptateur.

L'image de synthèse en trois dimensions ainsi obtenue étant une représentation "idéale" de la zone à contrôler, l'invention prévoit de calibrer ladite image de synthèse sur les images réelles pour obtenir une représentation fidèle en trois dimensions de la surface à contrôler.

Pour ce faire, on superpose sur un écran, une ou plusieurs projections en deux dimensions de l'image de synthèse à une ou plusieurs images vidéo correspondantes. Ces images vidéo peuvent être de deux types : des images de la soudure après nettoyage mais avant ressuage et des images de la soudure après ressuage.

Pour les étapes de superposition et de calibrage, on utilise de préférence les images avant ressuage.

La superposition d'une image de synthèse sur une image vidéo peut être réalisée sur un écarn soit globalement, soit point par point en fonction du matériel utilisé, la première méthode de superposition globale étant généralement préférée.

Pour calibrer l'image de synthèse, les paramètres d'entrée précités de l'image de synthèse sont modifiés pour faire concorder des éléments qui sont connus avec précision. Pour cette étape, plusieurs images vidéo et plusieurs projections en deux dimensions de l'image de synthèse peuvent être utilisées.

Après calibrage, on obtient une image de synthèse en trois dimensions qui représente fidèlement la surface de la soudure.

Les indications éventuelles visibles sur la ou les images vidéo après ressuage peuvent alors être transférées sur des projections en deux dimensions de l'image de synthèse, par l'introduction de paramètres appropriés dans le logiciel CAO.

Le transfert des indications visibles sur les images vidéo peut être réalisé manuellement point par point, en quelques points significatifs d'une courbe, par exemple des cercles ou des ellipses, ou par une méthode d'extraction de contour.

Ces indications peuvent alors déjà être analysées sur les projections en deux dimensions de l'image de synthèse pour déterminer leurs positions et leurs dimensions.

Toutefois, un aspect particulièrement avantageux de l'invention, est que l'utilisation de la CAO 3D permet de modéliser lesdites indications sur une image de synthèse en trois dimensions en projetant les indications en deux dimensions sur le modèle en trois dimensions.

On peut alors utiliser toutes les caractéristiques du logiciel de CAO 3D pour modifier l'angle de vue, éliminer de la matière gênant l'observation, dimensionner avec précision la ou les indications en tenant compte de la complexité de la surface et positionner avec précision la ou les indications.

Ces opérations étant réalisées pour chaque image vidéo, il est donc possible de reconstituer en volume la surface complète qui a été contrôlée. De plus, on peut reconstituer une indication de grande dimension en fusionnant des indications visibles sur des images vidéo différentes. On peut également comparer différentes informations obtenues par diverses prises de vue d'une même indication et choisir la plus plausible. De même, il devient possible de sortir des copies d'écran pour effectuer le rapport d'expertise avec des vues d'ensemble sous différents angles et des vues partielles.

Le procédé de caractérisation par image de synthèse de l'invention permet de fournir un rapport d'inspection fournissant pour chaque indication, son type (linéaire ou ellipse, par exemple), sa position en trois dimensions, ses dimensions. Ces données et les images vidéo et de synthèse correspondantes peuvent également être sauvegardées, en vue d'une comparaison lors d'un contrôle futur.

Dans la description qui précède, il est fait référence à une caméra vidéo. Cette caméra vidéo fait bien entendu partie d'une chaîne vidéo pouvant notamment comporter un ou plusieurs magnétoscopes pour les images avant et après ressuage, un moniteur vidéo, un mesureur vidéo et une imprimante vidéo.

L'invention a été décrite en rapport aux soudures d'adaptateur sur des couvercles de cuve de réacteur nucléaire, mais elle s'applique également pour le contrôle non destructif de surfaces quelconques situées en milieu hostile quelconque ou en milieu peu ou pas accessible à l'homme.

## Revendications

1. Procédé de contrôle non destructif d'une surface, en particulier en milieu hostile, comprenant l'étape de :
- disposer à proximité de ladite surface, une caméra vidéo télécommandée supportée par un dispositif de positionnement instrumenté, ladite caméra vidéo étant destinée à fournir des images vidéo de ladite surface à contrôler ;
ledit procédé étant caractérisé en ce qu'il comprend en outre les étapes de :
- générer une image de synthèse en trois dimensions d'un modèle de ladite surface à contrôler;
- superposer sur un écran une ou plusieurs projections en deux dimensions de ladite image de synthèse à une ou plusieurs images vidéo correspondantes ;
- calibrer une ou plusieurs projections en deux dimensions de ladite image de synthèse sur une ou plusieurs images vidéo correspondantes pour obtenir une image de synthèse correspondant sensiblement à la surface à contrôler ;
- transférer sur une projection en deux dimensions calibrée de ladite image de synthèse, une ou plusieurs indications visibles sur l'image vidéo correspondante, puis projeter ces indications sur l'image de synthèse en trois dimensions ;
- traiter la ou les images de synthèse en trois dimensions ainsi obtenues, ou leur projections en deux dimensions, pour analyser et caractériser lesdites indications de la surface à contrôler.

2. Procédé selon la revendication 1, dans lequel l'étape de générer une image de synthèse est réalisée en introduisant dans un logiciel des paramètres d'entrées caractéristiques de ladite surface.

3. Procédé selon la revendication 1 ou la revendication 2, dans lequel l'étape de superposer une image de synthèse à une image vidéo correspondante est réalisée par une superposition globale des deux image.

4. Procédé selon la revendication 1 ou la revendication 2, dans lequel l'étape de superposer une image de synthèse à une image vidéo correspondante est réalisée par une superposition manuelle point par point des deux images.

5. Procédé selon l'une quelconque des revendications précédentes, dans lequel l'étape de calibrer une image de synthèse sur une image vidéo correspondante est réalisée en faisant concorder des éléments connus avec précision et/ou en faisant varier un ou plusieurs desdits paramètres d'entrée.

6. Procédé selon l'une quelconque des revendications précédentes, dans lequel l'étape de transférer sur une image de synthèse une ou plusieurs indications de l'image vidéo est réalisée par un transfert manuel point par point.

7. Procédé selon l'une quelconque des revendications précédentes, dans lequel l'étape de transférer sur une image de synthèse une ou plusieurs indications de l'image vidéo est réalisée par une méthode d'extraction de contour.

8. Procédé selon l'une quelconque des revendications précédentes, dans lequel l'étape de traiter la ou les images de synthèse comprend notamment de positionner avec précision l'indication, de dimensionner avec précision l'indication, de modifier l'angle de vue, de comparer différentes vues d'une même indication, de reconstituer une indication de grande dimension, de reconstituer en volume la surface complète qui a été contrôlée, de stocker une ou plusieurs images et de les imprimer.

9. Procédé selon l'une quelconque des revendications 2 à 8, dans lequel le logiciel est un logiciel de CAO trois dimensions (conception assistée par ordinateur en trois dimensions).

10. Utilisation du procédé selon l'une quelconque ou plusieurs des revendications précédentes, pour analyser et caractériser des indications mises en évidence par un contrôle par ressuage des soudures (1), notamment des adaptateurs (10), sur un couvercle (20) d'une cuve de réacteur nucléaire, où lesdits paramètres d'entrée pour générer une image de synthèse de la surface à contrôler comprennent notamment les paramètres dimensionnels du couvercle (Rc), de l'adaptateur (R, r, h) et de la soudure (P, A, B, C), les paramètres de position (Z, d, α, θ) du dispositif de positionnement de la caméra vidéo (40), les paramètres (µ, m) d'un ou plusieurs miroirs éventuels (D) et les paramètres de fonctionnement de la caméra vidéo (40).
